# EUROPEAN PATENT SPECIFICATION

(11) **EP 3 192 986 B1**
(45) Date of publication and mention of the grant of the patent: **09.10.2019**
(21) Application number: 17156375.2
(22) Date of filing: 08.04.2013
(51) Int. Cl.: F01K 15/02, F01K 23/06, F02B 41/10, F02G 5/04

(54) **TURBO-COMPOUND SYSTEM**
TURBO-COMPOUND-SYSTEM
SYSTÈME TURBO-COMBINÉ

(43) Date of publication of application: 19.07.2017
(62) Divisional of application: 13162730.9
(73) Proprietor: FPT Motorenforschung AG, 9320 Arbon (CH)
(72) Inventor: FESSLER, Harald, 9320 ARBON (CH)
(74) Representative: Fiume, Orazio

(56) References cited:
- EP-A1- 1 916 397
- WO-A1-2012/096958
- DE-A1-102009 028 467
- DE-A1-102010 047 518
- JP-A- S58 220 945
- US-A- 3 224 186

## Description

### Field of the invention

The present invention relates to a turbo-compound system, in particular in the field of large displacement engines.

### Description of the prior art

Turbo-compound schemes are well known. They exploit the energy of the exhaust gasses to drive a turbine which provides mechanical energy to the engine crankshaft. The turbine axle and the engine crankshaft are usually connected between each other through reduction gears and/or a clutch. The gears adapt the high rotation speed of the turbine to the low rotation speed of the crankshaft. The clutch usually permits to disconnect the turbine when its contribution is too low or negative and protect the turbine from torsional vibrations. Also an electrical connection to the crank shaft is possible (a generator driven by the turbine and motor driving the engine crankshaft).

A turbine, as well known, exploits the energy (enthalpy) content contained in the exhaust gasses for recovery, directly, mechanical energy.

EP1916397 discloses all the feature of the preamble of claim 1, while WO2012096958 discloses the implementation of a low pressure EGR scheme in a combustion engine scheme implementing a WHR system.

### Summary of the invention

The main object of the present invention is to recovery as much energy as possible from the exhaust gasses. This object is achieved by providing a turbo-compound system provided also of a Waste heat recovery (WHR) system, to convert the heat energy, usually rejected to the ambient air, into mechanical power by means of a expander (Ex) exploiting Rankine Cycle.

The invention is disclosed in claim 1.

Advantageously, while WHR system carrying out a Rankine cycle is mainly effective at lower loads of the combustion engine due to heat rejection limitations, the power turbine (turbo compound) increases the efficiency of the overall system mainly at higher loads (larger than ~50%). Thus, the fuel consumption benefits can be extended to lower loads, starting from a turbo compound scheme. In general, the fuel consumption improves within the entire engine map.

These and further objects are achieved by means of an apparatus and method as described in the attached claims, which form an integral part of the present description.

### Brief description of the drawings

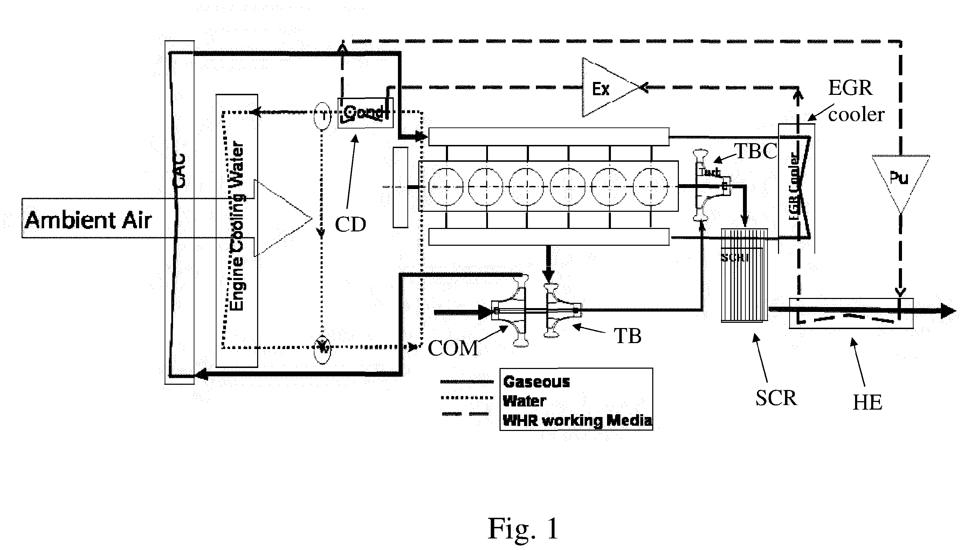

The invention will become fully clear from the following detailed description, given by way of a mere exemplifying and non limiting example, to be read with reference to the attached drawing figure 1, wherein a scheme for heat recovering of a combustion engine provided of turbo-compound is shown.

The same reference numerals and letters in the figures designate the same or functionally equivalent parts.

### Detailed description of the preferred embodiments

A preferred embodiment of the system for heat recovering, WHR, is shown on figure 1.

A turbine TBC is driven by the exhaust gasses and the mechanical energy produced is provided to the combustion engine in a known way, as described above.

The invention is particularly adapted but not limited to a combustion engine E provided with a turbo-supercharging unit, namely a turbine TB fed by the exhaust gases and a compressor COM driven by said turbine TB for compressing fresh air entering in the combustion engine E.

The engine E could be further provided with an intercooler CAC for refreshing the fresh air compressed by the compressor COM and/or with an EGR means with an EGR cooler for refreshing recirculated gasses.

The radiator ECW (Engine cooling water) rejects the heat contained in the engine coolant to the ambient air. The intercooler, if present, rejects the heat contained in the compressed air in the ambient.

The Rankine Cycle is operated through a different medium, hereinafter called WHR medium.

The coolest source of the Rankine cycle is the a condenser CD. It is a heat exchanger between the engine liquid and the WHR medium, connected on the coolant circuit, preferably, downstream with respect to the ECW, according to the water circulation direction.

The WHR medium condensed within the condenser CD is pumped by the pump PU to the heater HE, that exploits the heat contained in the exhaust gasses to evaporate it to expand within the Expander EX. The Expander can be any machine, per se known.

After the Expander, the WHR medium comes back to the condenser CD.

According to a preferred embodiment of the invention the engine is turbo-supercharged and in particular the turbine TBC associated to the engine crankshaft is disposed downstream the turbo-supercharging unit, namely the turbine TB coupled with the compressor COM. Therefore, the exhaust gasses going out from the combustion engine cross the first turbine TB and then cross the turbine TBC. Hence the exhaust gasses cross a device, briefly called SCR, for reducing the pollutant emissions, such as an SCR and/or a DOC and/or an anti-particulate filter.

Along the ATS (After treatment system), downstream the SCR device, is disposed the heater HE for heating the WHR medium.

Also the EGR cooler can be refreshed by the WHR medium, the latter receiving a further heat contribution for the heat recovery.

The expander can produce either mechanical, electrical, hydraulic energy to be supplied to the combustion engine and/or to the vehicle in general.

For example, the electrical energy produced can be exploited for feeding an electric motor coupled with the combustion engine or with one of the vehicle driving axles.

Also the pump can be driven by the combustion engine, or by the expander or by an electric motor.

The functions of said control unit could be integrated into a engine control unit.

The expander can be per se known.

According to a further preferred embodiment of the invention, which can be combined with the other ones, previously discussed, the combustion engine can be of the turbo-compound type.

It is well know, that a turbo compound turbine shows mainly benefits at higher loads. Even though the compound turbine extracts some energy the exhaust gas temperature are still high enough to drive a WHR system and get a combined benefit with corresponding reduction in fuel consumption. Actually the WHR system heat extraction is anyway limited by maximum vehicle cooling capacity. Hence the reduction of the exhaust gas energy due the TBC does not reduce the WHR efficiency at high loads. At low loads (<50%) the compound turbine is less effective and does hardly extract energy, which means the main gain in energy recovery comes from the WHR system. The combination of both technologies improves the fuel consumption in the entire operating range (engine map) without interfering between each other.

In order to permit the activation/deactivation of the WHR system, by-pass means can be provided in order to promote the bypass of the heater (HE) by the WHR medium and/or the bypass of the heater (HE) by the exhaust gasses. This especially when, at critical loads, the engine coolant reaches a threshold temperature.

A control unit can, therefore, manage the connection of the compound turbine TBC with the crankshaft and the activation/deactivation of the WHR system.

The control of the several architectural components described above can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention as defined by the appending claims are deemed to be covered by this invention.

Further implementations, the several embodiments disclosed can be combined between each other, also with the discussed prior art. Further well known details are not discussed as the man skilled in the art is able to carry out the invention starting from the teaching of the above description.

## Claims

1. Turbo-compound system comprising a combustion engine (E) and a first turbine (TBC) fed by exhaust gasses of the combustion engine and having a shaft connected with an engine crankshaft for providing the latter with mechanical energy and **characterized in** comprising a heat recovery (WHR) system, coupled with said combustion engine (E), for carrying out a Rankine Cycle by exploiting the heat produced by the combustion engine for producing further mechanical energy and **characterized in** comprising a device (SCR) for reducing the pollutant emissions arranged between said first turbine (TBC) and a heater (HE) for heating a WHR medium and in comprising a EGR cooler refreshed by said WHR medium.

2. The system according to claim 1, wherein the mechanical energy produced by the heat recovery (WHR) system is provided to said engine crankshaft.

3. The system according to claim 1, wherein the mechanical energy produced by the heat recovery (WHR) system is provided to an electric generator.

4. The system according to claim 1, wherein said EGR cooler has an inlet and an outlet directly connected to the engine.

5. The system according to any of the preceding claims, wherein the combustion engine (E) comprises an engine cooling water (ECW) of the liquid to ambient air type for cooling the engine coolant and wherein the condenser (CD) is a heat exchanger of the liquid to WHR medium type, series connected with said engine cooling water (ECW).

6. The system according to one of the preceding claims, further comprising a heater (HE) on the engine after treatment system for exploiting the heat of the exhaust gasses for heating the WHR medium.

7. The system according to one of the preceding claims, further comprising an expander (EX) fed by the WHR medium heated, at least, by said heater (HE) and providing with mechanical energy
- said combustion engine (E) and/or
- an electric generator.

8. The system according to claim 7, wherein, when the expander (EX) provides with mechanical energy an electric generator, an electric motor is connected with the engine crankshaft, to provide the latter with said further mechanical energy, and fed with electric energy produced by said electric generator.

9. The system according to one of the preceding claims, further comprising a turbo-supercharging unit (TB, COM) comprising a second turbine (TB) driving a compressor (COM) for compressing fresh air at the combustion engine intake.

10. The system according to claim 9, wherein said a second turbine (TB) is disposed upstream of said first turbine (TBC) along said after treatment system.

11. Terrestrial vehicle provided with a combustion engine (E) provided with turbo-compound means and a system for heat recovery (WHR) of the combustion engine (E) according to one of the preceding claims from 1 to 10.

## Patentansprüche

1. Turboverbundsystem, das eine Brennkraftmaschine (E) und eine erste Turbine (TBC) umfasst, die durch Abgase der Brennkraftmaschine gespeist wird und eine Welle besitzt, die mit einer Brennkraftmaschinenkurbelwelle verbunden ist, um letztere mit mechanischer Energie zu versorgen, **gekennzeichnet durch** ein Wärmerückgewinnungssystem (WHR-System), das mit der Brennkraftmaschine (E) verbunden ist, um einen Rankine-Zyklus durch Nutzen der Wärme, die durch die Brennkraftmaschine erzeugt wird, auszuführen, um weitere mechanische Energie zu erzeugen, und **gekennzeichnet durch** eine Einrichtung (SCR) zum Verringern der Schadstoffemissionen, die zwischen der ersten Turbine (TBC) und einer Heizung (HE) zum Erhitzen eines WHR-Mediums angeordnet ist, und einen AGR-Kühler, der durch das WHR-Medium aufgefrischt wird.

2. System nach Anspruch 1, wobei die mechanische Energie, die durch das Wärmerückgewinnungssystem (WHR-System) erzeugt wird, an die Kraftmaschinenkurbelwelle geliefert wird.

3. System nach Anspruch 1, wobei die mechanische Energie, die durch das Wärmerückgewinnungssystem (WHR-System) erzeugt wird, an einen elektrischen Generator geliefert wird.

4. System nach Anspruch 1, wobei der AGR-Kühler einen Einlass und einen Auslass besitzt, die mit der Kraftmaschine direkt verbunden sind.

5. System nach einem der vorhergehenden Ansprüche, wobei die Brennkraftmaschine (E) ein Kraftmaschinenkühlwasser (ECW) des Flüssigkeits-zu-Umgebungsluft-Typs zum Kühlen des Kraftmaschinenkühlmittels umfasst und der Kondensator (CD) ein Wärmetauscher des Flüssigkeits-zu-WHR-Medium-Typs ist, der in Reihe mit dem Kraftmaschinenkühlwasser (ECW) geschaltet ist.

6. System nach einem der vorhergehenden Ansprüche, das ferner eine Heizung (HE) in der Kraftmaschine nach einem Behandlungssystem zum Nutzen der Wärme des Abgases zum Erhitzen des WHR-Mediums umfasst.

7. System nach einem der vorhergehenden Ansprüche, das ferner einen Expander (EX) umfasst, der durch das WHR-Medium, das mindestens durch die Heizung (HE) erhitzt wird, gespeist wird, und Folgendes mit mechanischer Energie versorgt:
- die Brennkraftmaschine (E) und/oder
- einen elektrischen Generator.

8. System nach Anspruch 7, wobei dann, wenn der Expander (EX) einen elektrischen Generator mit mechanischer Energie versorgt, ein Elektromotor mit der Kraftmaschinenkurbelwelle verbunden ist, um letztere mit der weiteren mechanischen Energie zu versorgen, und mit elektrischer Energie, die durch den elektrischen Generator erzeugt wird, gespeist wird.

9. System nach einem der vorhergehenden Ansprüche, das ferner eine Turboaufladungseinheit (TB, COM) umfasst, die eine zweite Turbine (TB), die einen Kompressor (COM) zum Komprimieren von Frischluft am Brennkraftmaschineneinlass antreibt, umfasst.

10. System nach Anspruch 9, wobei die zweite Turbine (TB) stromaufwärts der ersten Turbine (TBC) entlang des Nachbehandlungssystems angeordnet ist.

11. Terrestrisches Fahrzeug, das mit einer Brennkraftmaschine (E) versehen ist, die mit Turboverbundmitteln und einem Wärmerückgewinnungssystem (WHR-System) der Brennkraftmaschine (E) nach einem der vorhergehenden Ansprüche von 1 bis 10 versehen ist.

## Revendications

1. Système de turbo-récupération comprenant un moteur à combustion (E) et une première turbine (TBC) alimentée par des gaz d'échappement du moteur à combustion et ayant un arbre raccordé à un vilebrequin de moteur pour fournir à ce dernier de l'énergie mécanique et **caractérisé en ce qu'**il comprend un système de récupération de chaleur (WHR), couplé audit moteur à combustion (E), pour réaliser un cycle de Rankine en exploitant la chaleur produite par le moteur à combustion pour produire davantage d'énergie mécanique et **caractérisé en ce qu'**il comprend un dispositif (SCR) pour réduire les émissions de polluant agencé entre ladite première turbine (TBC) et un élément chauffant (HE) pour chauffer un milieu WHR et **en ce qu'**il comprend un refroidisseur RGE rafraîchi par ledit milieu WHR.

2. Système selon la revendication 1, dans lequel l'énergie mécanique produite par le système de récupération de chaleur (WHR) est fournie audit vilebrequin de moteur.

3. Système selon la revendication 1, dans lequel l'énergie mécanique fournie par le système de récupération de chaleur (WHR) est fournie à un générateur électrique.

4. Système selon la revendication 1, dans lequel ledit refroidisseur RGE comporte un orifice d'entrée et un orifice de sortie raccordés directement au moteur.

5. Système selon l'une quelconque des revendications précédentes, dans lequel le moteur à combustion (E) comprend une eau de refroidissement moteur (ECW) du type liquide à air ambiant pour refroidir le liquide de refroidissement moteur et dans lequel le condenseur (CD) est un échangeur de chaleur du type liquide à milieu WHR, raccordé en série à ladite eau de refroidissement moteur (ECW).

6. Système selon l'une des revendications précédentes, comprenant en outre un élément chauffant (HE) sur le système de post-traitement de moteur pour exploiter la chaleur des gaz d'échappement pour chauffer le milieu WHR.

7. Système selon l'une des revendications précédentes, comprenant en outre un détendeur (EX) alimenté par le milieu WHR chauffé, au moins, par ledit élément chauffant (HE) et fournissant de l'énergie mécanique
- audit moteur à combustion (E) et/ou
- à un générateur électrique.

8. Système selon la revendication 7, dans lequel, lorsque le détendeur (EX) fournit de l'énergie mécanique à un générateur électrique, un moteur électrique est raccordé au vilebrequin de moteur, pour fournir à ce dernier ladite énergie mécanique supplémentaire, et est alimenté en énergie électrique produite par ledit générateur électrique.

9. Système selon l'une des revendications précédentes, comprenant en outre une unité de turbo-compression de suralimentation (TB, COM) comprenant une seconde turbine (TB) entraînant un compresseur (COM) pour comprimer de l'air frais au niveau de l'admission du moteur à combustion.

10. Système selon la revendication 9, dans lequel ladite seconde turbine (TB) est disposée en amont de ladite première turbine (TBC) avec ledit système de post-traitement.

11. Véhicule terrestre pourvu d'un moteur à combustion (E) pourvu de moyens de turbo-récupération et d'un système de récupération de chaleur (WHR) du moteur à combustion (E) selon l'une des revendications 1 à 10 précédentes.
